# EUROPEAN PATENT APPLICATION

(11) **EP 2 624 531 A1**
(43) Date of publication of application: **07.08.2013**
(21) Application number: 11828047.8
(22) Date of filing: 02.09.2011
(51) Int. Cl.: H04M 1/725

(54) **INTELLIGENT GROUPING SYSTEM AND METHOD FOR MOBILE TERMINAL CONTACT BOOK**

(30) Priority: 30.09.2010 CN 201010501259
(71) Applicant: Beijing Netqin Tech. Co., Ltd., Beijing 100013 (CN)
(72) Inventor: LI, Feng, Beijing 100013 (CN); CHENG, Ping, Beijing 100013 (CN); ZHU, Mei, Beijing 100013 (CN); ZOU, Shihong, Beijing 100013 (CN); LIN, Yu, Beijing 100013 (CN)
(74) Representative: Cabinet Laurent & Charras
(86) International application number: PCT/CN2011/079298
(87) International publication number: WO 2012/041151

(57) **Abstract**

Disclosed is an intelligent grouping system and method for a mobile terminal contact directory. The method comprises: connecting a client to a server in a wireless or wired manner to form an intelligent recognition system; synchronizing a contact directory of the client with the server; discovering, by the client, an event and extracting data information in the discovered event; analyzing, by the intelligent recognition system, the extracted data information, and automatically grouping the contact directory of the client according to the data information, the grouping information being synchronized between the client and the server through communication link; storing a contact directory grouping result in a database of the server; and displaying the grouping information on the client.

## Description

### FIELD OF THE INVENTION

The present invention relates to the field of mobile communication and information security, and in particular, to an intelligent grouping system and method for a mobile terminal contact directory.

### BACKGROUND OF THE INVENTION

To group entries in a mobile terminal contact directory, a user needs to select and arrange the entries one-by-one manually, and the operations are therefore complex and the operability is poor.

With the development of the mobile communication technology, a mobile phone becomes one of the most popular communication tools for people. Most of mobile phones provide functions of storing and managing contact directories, and their users can record names/phone numbers/company names of their contacts as cards; and a contact can be searched based on his/her names or phone numbers.

The combination of the contact directory and the communication tool provides great convenience for people, and people get used to store phone numbers into their mobile phones more and more. Meanwhile, with the development of the Internet, emails, and Instant Messengers, the communication and connections among people are becoming more convenient and social circles of people are becoming wider than before. As a result, the contact directory grows very rapidly. For some business professionals, the number of contacts in the contact directory on the mobile phones may be hundreds, or even thousands.

However, contacts in a contact directory may belong to different social circles, and such a situation will bring inconvenience to the management of the contact directory. Although most of management software for the mobile phone contact directory allows users to store more attributes of contacts, such as company name, email, or address, and the like, a user may also classify the contacts based on their social circles. However, the classes need to be input manually by the user, and therefore the workload is high and the efficiency is low.

The disclosure of any information in the Background section of the present invention intends to improve the readers' comprehension of the overall background of the present invention only, and should not be regarded as admission or implication that such information constitutes the prior art which is well-known to one ordinarily skilled in the art.

### SUMMARY OF THE INVENTION

To recognize and divide personal social circles more conveniently and accurately, connections among contacts are adjusted intelligently, i.e. a contact directory stored in a mobile terminal is grouped based on a plurality of types of information.

As compared with the prior art, the present invention provides explicit advantages and effects. The prior art employs a simple, primal manual method for editing, and therefore the user's willingness to operate such a method is weak, which does not help the management of the social circles.

According to one aspect of the present invention, a method of grouping a mobile terminal contact directory intelligently is provided. The method comprises the steps of connecting a client to a server in a wireless or wired manner to form an intelligent recognition system; synchronizing a contact directory of the client with the server; the client discovering an event and extracting data information from the discovered event; the intelligent recognition system analyzing the extracted data information, and automatically grouping the contact directory of the client according to the data information, the grouping information being synchronized between the client and the server; storing a contact directory grouping result in a database of the server; and displaying the grouping information on the client.

According to another aspect of the present invention, an intelligently grouping system for grouping a mobile terminal contact directory is provided. The system comprises a client and a server. The system is characterized in that connecting the client to the server in a wireless or wired manner to form an intelligent recognition system. The client is configured for discovering an event and displaying grouping information. The server is configured for making a series of logical decisions on data information in a contact directory and the location information to filter out groups that meet requirements, storing the groups, and then synchronizing the grouping information with the client.

According to another aspect of the present invention, an intelligently grouping system for grouping a mobile terminal contact directory is provided, wherein the client further comprises: an SMS (short message service) message monitoring unit configured for discovering an SMS message group sending event, automatically generating groups, notifying a data management unit of the groups, and storing the same; a location information management unit configured for reading location information of the mobile terminal and notifying the data management unit of the same; the data management unit configured for storing grouping information, and meanwhile, sending the contact directory and the location information to a communication unit; and the communication unit configured for synchronizing the grouping information, the contact directory, and the location information to the server.

According to another aspect of the present invention, an intelligently grouping system for grouping a mobile terminal contact directory is provided, wherein the server further comprises: a communication unit configured for receiving data from the client, and passing the data to a statistic and calculation unit for background data analysis, wherein the communication unit also synchronizes the analysis result with the client; and a statistic and calculation unit configured for calculating the analysis result and storing the same into a database.

The intelligently grouping system and method of the present invention can identify and arrange habits and customs of a user so as to automatically generate grouping information, which is more appropriate for real situations and operability of such a system or method is high, and the groups thus classified is more valuable.

### BRIEF DESCRIPTION OF THE DRAWINGS

The features and advantages of the present invention will be clearer when the description of the attached drawings and the detailed description of the present invention below are referenced.
Fig. 1 is a flow chart illustrating the event-triggered intelligent grouping;
Fig. 2 is a flow chart illustrating the intelligent grouping based on contact directories, locations, and aggregation frequency;
Fig. 3 is a flow chart illustrating the intelligent grouping of groups of interest based on contact directories, locations, and frequency of arriving at locations; and
Fig. 4 is a schematic block diagram of a configuration of a system.

### DETAILED DESCRIPTION OF PREFERRED EMBODIMENTS

Next, various embodiments of the present invention will be referenced specifically, and instances of these embodiments are shown in the attached drawings and description hereinafter. Although the present invention is described in conjunction with the exemplary embodiments, one skilled in the art should appreciate that the present specification does not intend to limit the present invention into those exemplary embodiments. On the contrary, the present invention intends to not only cover all those exemplary embodiments, but also all substitutions, modifications, equivalents, and other embodiments that fall into the spirit and scope of the present invention which is defined by the attached claims.

According to an embodiment of the present invention, a method of grouping a mobile terminal contact directory intelligently is provided by the present invention. The method comprises connecting a client to a server in a wireless or wired manner to form an intelligent recognition system; the client synchronizes data information with the server. Preferably, the client synchronizes data such as the contact directory and location information with the server periodically. The server receives the data from the client, performs a background data analysis, and synchronizes the analysis result with the client; stores the result into a database. The grouping information is synchronized with the client through the communication link between the server and the client, and the grouping information is displayed.

In the method of grouping a mobile terminal contact directory intelligently according to the present invention, a name of a client, whose information is not stored in a contact directory of another client, is automatically added into the contact directory of the another client or automatically set to be invisible to the another client.

The present invention provides a method of grouping a mobile terminal contact directory intelligently. The method comprises: receiving a group-sent SMS message by a receiving unit. Recipients of the group-sent SMS message are grouped by a grouping unit based on the SMS message received by the receiving unit, and all recipients of the group-sent SMS message are added into the group as the content of the group. Preferably, the recipients to be grouped are classified into recipients who have already existed in the client and recipients who have not existed in the client. The content of the group-sent SMS message is extracted by a content extracting unit, and the group is named after the content of the SMS message. The content of the group and the name of the group are stored by a storage unit. The content of the group and the name of the group are displayed by a display unit. Said system is a system implementing the above method.

Preferably, a user of the client may edit the name of the group by an editing unit. Preferably, in the above groups of the client, the client may only display the recipients who have already existed in the client.

Subsequently, this grouping information may be preferably synchronized with the server by the client, and stored into a database.

In the method of grouping a mobile terminal contact directory intelligently according to the present invention, discovering an event comprises discovering the location information of the mobile terminal, and the client is grouped intelligently based on the location information and aggregation frequency.

In the method of grouping a mobile terminal contact directory intelligently according to the present invention, the method further comprises: the client synchronizes the contact directory with the server in advance, and the client binds with an account, and associates with a phone number; the server generates a knowledge connection with respect to one another based on content of contact directories of various clients. The client records its own location information by a predetermined time interval, and synchronizes the same with the server. The server arranges and analyzes the location information, and several clients which have knowledge connections with respect one another will be designated as one group automatically once it is found that they aggregate together over a predetermined number of times; the server designates clients as one group based on the time and space connections of the clients; and the server synchronizes the grouping information, which is generated intelligently, to the client periodically.

In the method of grouping a mobile terminal contact directory intelligently according to the present invention, discovering an event comprises: discovering a location of the mobile terminal, a frequency of aggregating or arriving at the location, and details of the location information, preference of each person is identified and the client is grouped intelligently, based on the contact directory, the location, the frequency of arriving at the location, and the details of the location information.

In the method of grouping a mobile terminal contact directory intelligently according to the present invention, the method further comprises: the client binds with an account, and associates with a telephone number; the client synchronizes the contact directory of the mobile terminal with the server; the server analyzes and generates connections with respect to one another based on content of contact directories of various clients; the client records its own location information by a predetermined time interval, and synchronizes the same with the server, or records the location information manually by the user; the server recognizes the class of each marked location; the server determines preferences; the server identifies users who know each other and have a same preference based on the connections of accounts or telephone numbers of each client, and generates one group of interest automatically; and the server synchronizes the generated group of interest with the client periodically.

According to an embodiment of the present invention, a system for grouping a mobile terminal contact directory intelligently is provided. The system comprises a client and a server. The client connects the server in a wireless or wired manner to form an intelligent recognition system.

The client discovers an event and displays grouping information. The server makes a series of logical decisions on the contact directory and location information to filter out groups that meet requirements, store the groups, and then synchronizing the grouping information with the client through the communication link.

In an intelligently grouping system for grouping a mobile terminal contact directory according to the present invention, the client further comprises following units. An SMS message monitoring unit discovers an SMS message group sending event, automatically generates a group of the sent event, and notifies data management unit of the group of the sent event and stores the same. A location information management unit reads the location information of the mobile terminal and notifies the data management unit of the same. The data management unit stores the grouping information, and sends the contact directory and the location information to a communication unit. The communication unit synchronizes the grouping information, the contact directory, and the location information with the server.

In an intelligently grouping system for grouping a mobile terminal contact directory according to the present invention, the server comprises a communication unit and a statistic and calculation unit. The communication unit receives data from the client, and passes the data to the statistic and calculation unit for background data analysis. The communication unit also synchronizes the analysis result with the client. The statistic and calculation unit calculates the result of the background data analysis and stores the same into a database.

The intelligently grouping system for grouping a mobile terminal contact directory intelligently provided by the present invention requires two major components, i.e., the client and the server. The functions of the client may be achieved by software installed in the client to make decisions on events and group the contact directory intelligently, but not limit to that. It should note that the functions of the client can be achieved by hardware or firmware. The client may be a mobile terminal, a personal computer, a cell phone, a UE or other mobile communication devices, but not limit to those.

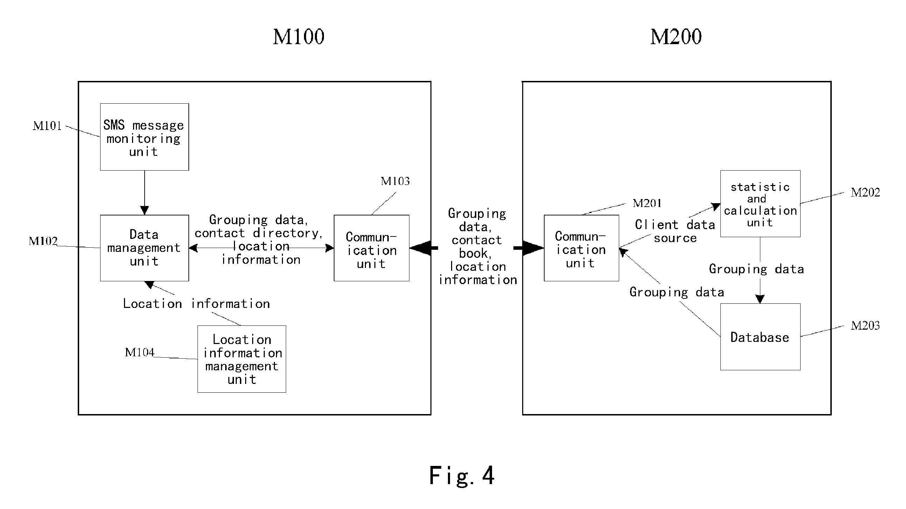

Fig. 4 shows a schematic block diagram of the configuration of the intelligent grouping system.

The intelligent grouping system provided by the present invention comprises a client and a server. The client is connected to the server in a wireless or wired manner to form an intelligent recognition system. In Fig. 4, M100 denotes the client, and M200 denotes the server.

The client is mainly used for discovering an event such as an SMS message group-sending event, and displaying grouping information. M101 is an SMS message monitoring unit for discovering an SMS message group-sending event, automatically generating groups, and notifying a data management unit M102 of the groups. M104 is a location information management unit for reading the location information of the mobile terminal and notifying the data management unit M102 of the same. The data management unit M102 stores the grouping information, and sends the contact directory and location information to the communication unit M103. The communication unit M103 synchronizes the grouping information, the contact directory, and the location information with the server.

The server makes a series of logical decisions on the contact directory and the location information to filter out groups that meet requirements, and then stores the groups. The server synchronizes the grouping information with the client through the communication link. A communication unit M201 receives data from the client, and forwards the data to a statistic and calculation unit M202 to perform background data analysis. M201 may also synchronize the analysis result with the client. The statistic and calculation unit M202 calculates the result of the background data analysis and stores the same into a database M203.

According to an embodiment of the present invention, the intelligent grouping system may comprise an intelligent grouping system based on event trigger, and another intelligent grouping system based on contact directories, location, and aggregation frequency, etc.

According to an embodiment of the present invention, in the event-triggered intelligent grouping system, when an SMS message is group-sent, the client recognizes such an event, classifies the recipients into a same group automatically. Meanwhile, an abstract is extracted from the content of the SMS message as the name of the group. The user of the client may edit the name.

According to an embodiment of the present invention, the intelligent grouping system based on contact directories, location, and aggregation frequency may perform following operations.
(a) The client synchronizes the contact directory of the mobile terminal with the server in advance, and binds with an account, and associates with a phone number.
(b) The server establishes a connection for each of the clients, i.e. makes clients know each other, based on the content of the contact directories of various clients (accounts).
(c) The client records its own location information by a predetermined time interval, and synchronizes the location information with the server.
(d) The server arranges and analyzes the location information, and several mobile terminals (people) which know each other will be designated as one group automatically once it is found that they aggregate together over a predetermined number of times.
(e) In the operation of (d), the conditions that can be used to designate as one group may be one of, for example, (1) during a same time period, for example, a 10 minute interval from 08-04-2010, 9:10 to 9:20; (2) for example, six people, A, B, C, D, E, and F, aggregate in close vicinity of a same coffee bar, the distance therebetween is less than 200 meters, and this distance can be adjusted based on the real situations of the location; (3) the six people, A, B, C, D, E, and F, aggregated in this coffee bar or any other place before; (4) the six people, A, B, C, D, E, and F, aggregated together, for example, at least 3 times, and the threshold of the aggregation can be adjusted based on the predetermined situations also; and (5) for any two of the six people, A, B, C, D, E, and F, there is a path, which is composed of the connections in the contact directories, that links these two people together. In other words, the six people, A, B, C, D, E, and F, can be connected in series.
(f) In the case where (d) and (e) are satisfied, the server designates the six people, A, B, C, D, E, and F, as one group.
(g) The server synchronizes the grouping information, which is generated intelligently, with the client periodically.
(h) Especially, when only B, C, and D are in the contact directory of A, the client of A will only show B, C, and D within the same one group, and E and F will not be shown.

According to another embodiment of the present invention, the intelligent grouping system recognizes preference of each people based on the contact directory, the location, the frequency of aggregating or arriving at a certain location, and the details of the location. The information includes the name of the location, the type of the location, etc., and is divided into the groups based on interests. The intelligent grouping system may perform following operations.
(a) The client records its own location information by a predetermined time interval, and synchronizes the location information with the server. The location information can also be recorded manually by the user, for example, by marking.
(b) The server recognizes the class of each location, for example, a badminton stadium, a restaurant such as Sichuan cuisine, Hunan cuisine, or Cantonese cuisine, a view spot such as a mountain, a culture landscape, or a historical site, a cinema, a bar, a KTV, or a chess-and-card room, etc.
(c) When a people visits a certain type of locations for several times, for example, 10 times (the number of times can be adjusted as required), the server determines the preference of this people as this type, for example, preferring a restaurant such as Sichuan cuisine.
(d) The server identifies people who know each other based on the connections between the accounts or phone numbers of each client. The server identifies the people who know each other and have a same preference based on the preference determination result of (c). For example, all the six people, A, B, C, D, E, and F, prefer a restaurant such as Sichuan cuisine.
e) The server synchronizes the intelligently generated group of interest with the client periodically.
(f) Especially, when only B, C, and D are in the contact directory of A, the client of A will only show B, C, and D within the same one group, and E and F will not be shown.

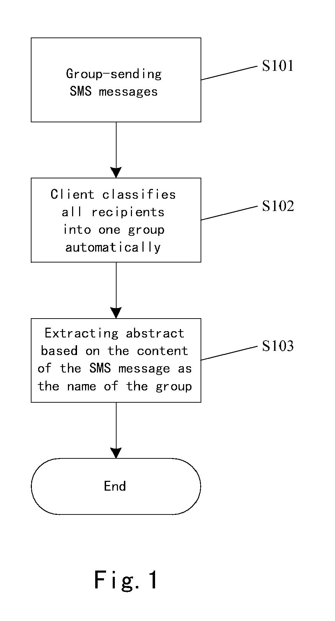

Fig. 1 illustrates a flow of event-triggered intelligent grouping. At step S101, an SMS message is group-sent. At step S102, the client recognizes an event of group sending an SMS message, and classifies the recipients into a same group automatically. At step S103, an abstract is extracted based on the content of the SMS message as the name of the group. The user may also edit the name.

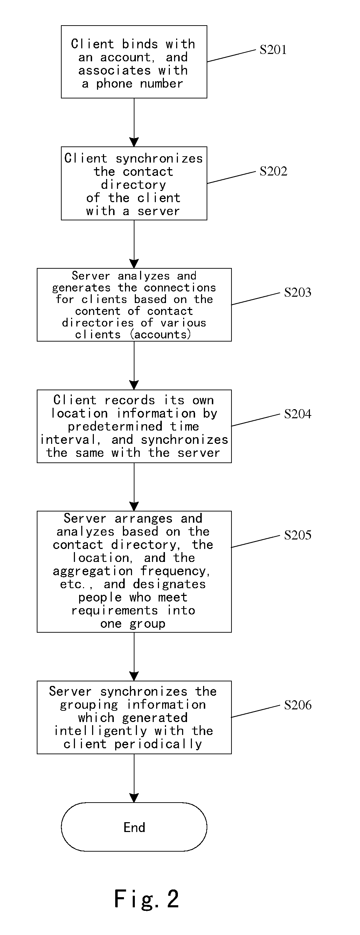

Fig. 2 illustrates the intelligent grouping based on the contact directory, the location, and the aggregation frequency. At step S201, the client binds with an account, and associates with a phone number. At step S202, the client synchronizes the contact directory of the mobile terminal with the server. At step S203, the server established a connection for each other, i.e. the clients know each other, based on the content of the contact directories of various clients (accounts). At step S204, the client records its own location information by a predetermined time interval, and synchronizes with the location information with the server. At step S205, the server arranges and analyzes the location information, and several mobile terminals (users) which know each other will be designated as one group automatically once it is found that they aggregate together over a predetermined number of times. At step S206, the server synchronizes the grouping information, which is generated intelligently, with the client periodically. Especially, when only B, C, and D are in the contact directory of A, the client of A will only show B, C, and D within the same one group, and E and F will not be shown.

In particular, the conditions that can be used to designate as one group may comprise: during a same time period, for example, a 10 minute interval from 2010-08-04 9:10 to 9:20; and for example, six people, A, B, C, D, E, and F, aggregate close to a same coffee bar, the distance therebetween is less than 200 meters, and this distance can be adjusted based on predetermined situations of the location. For example, the six people, A, B, C, D, E, and F, aggregated in this coffee bar or any other place before. In an example, the six people, A, B, C, D, E, and F, aggregated together for at least 3 times, and the threshold of aggregation can be adjusted based on the predetermined situations. In another example, for any two people in the six people, A, B, C, D, E, and F, there is a path, which is composed of the connections in the contact directory, that links these two people together. In other words, the six people, A, B, C, D, E, and F, can be connected in series.

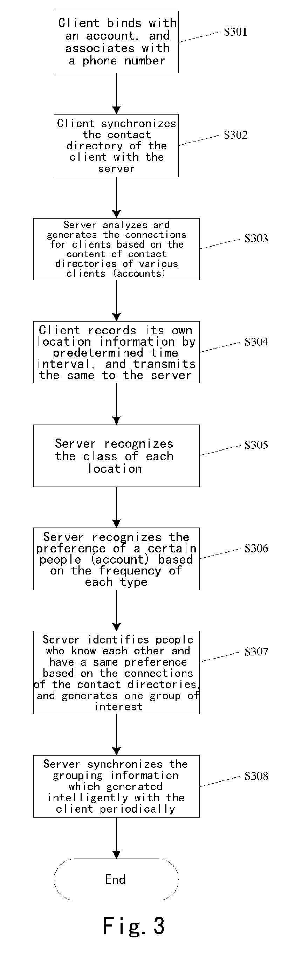

Fig. 3 illustrates a flow of the intelligent grouping system recognizes preference of each people based on the contact directory, the location, the frequency of aggregating or arriving at a location, and the details of the location. The location information includes the name of the location, types, etc., and divides the group of interest intelligently. At step S301, the client binds with an account, and associates with a telephone number. At step S302, the client synchronizes the contact directory of the mobile terminal with the server. At step S303, the server analyzes and establishes the connections for each of clients based on the content of the contact directories of various clients (accounts). At step S304, the client records its own location information by a predetermined time interval, and synchronizes the location information with the server.

The user may also record the location information manually, for example, by marking. At step S305, the server recognizes the class of each marked location, for example, a badminton stadium, a restaurant such as Sichuan cuisine, Hunan cuisine, or Cantonese cuisine, a view spot such as a mountain, a culture landscape, or a historical site, a cinema, a bar, a KTV, or a chess-and-card room, etc.. At step S306, when a people visits a certain type of locations for several times, for example, 10 times (the number of times can be adjusted as desired), the server determines the preference of this people as this type, for example, preferring a restaurant such as Sichuan cuisine. At step S307, the server identifies people who know each other based on the connections between the accounts or phone numbers of each client, and picks those people who know each other. The server then identifies the people who know each other and have a same preference based on the preference determination result. For example, all the six people, A, B, C, D, E, and F, prefer a restaurant such as Sichuan cuisine, and a group of interest is generated automatically. At step S308, the server synchronizes the intelligently generated group of interest with the client periodically. Especially, when only B, C, and D are in the contact directory of A, the client of A will only show B, C, and D within the same one group, and E and F will not be shown.

The foregoing description of specific exemplary implementations of the present invention is for the purpose of illustration and exemplification. This description does not intend to exhausts the present invention, or to limit the present invention to the disclosed specific forms, and it is obvious to make many modifications and alterations according to the teachings above. For example, optionally, the above one or more steps can be performed automatically, or cannot be performed without the confirmation from the client. The purpose of selecting and describing the exemplary embodiments is to explain the specific principles of the present invention and their real applications, such that one skilled in the art can achieve and employ the different various exemplary implementations of the present invention and their different various selections and modifications. The scope of the present invention intends to be limited by the attached claims and their equivalents.

## Claims

1. A method of grouping a client contact directory intelligently, comprising the steps of:
connecting a client to a server in a wireless or wired manner to form an intelligent recognition system;
synchronizing a contact directory of the client with the server;
discovering, by the client, an event and extracting data information in the discovered event;
analyzing, by the intelligent recognition system, the extracted data information, and automatically grouping the contact directory of the client according to the data information, the grouping information being synchronized between the client and the server through communication link;
storing a contact directory grouping result in a database of the server; and
displaying the grouping information on the client.

2. The method according to claim 1, further comprising: a name of a client, whose information is not stored in a contact directory of another client, in a group is automatically added into the contact directory of another client or is automatically set to be invisible.

3. The method according to claim 1 or 2, wherein discovering an event comprises discovering an SMS message group-sending event, the contact directory is grouped intelligently by the client of the intelligent recognition system based on the SMS message group-sending event.

4. The method according to claim 3, wherein when the SMS message group-sending event occurs, the client recognizes the type of SMS message group-sending events, classifies the recipients of the SMS message into a same group, and extracts an abstract from the content of the SMS message as the name of the group, or the user edits the name.

5. The method according to claim 1 or 2, wherein discovering an event comprises discovering the location information of the client, and grouping the contact directory by the server of the intelligent recognition system based on the location information and aggregation frequency.

6. The method according to claim 5, further comprising:
synchronizing, by the client, the contact directory of the client with the server, binding the client with an account, and associates the client with a phone number;
generating, by the server, a recognition connection for each of the clients based on the contents of the contact directories of various clients;
recording, by the client, its own location information by predetermined time interval, and synchronizing the location information with the server;
arranging and analyzing, by the server, the location information, and the clients which have known with each other being designated as one group automatically once it is found that they aggregate together over a predetermined number of times;
designating, by the server, clients as one group based on the time and space connections of the clients; and
synchronizing, by the server, the grouping information, which is generated intelligently, with the client periodically.

7. The method according to claim 1 or 2, wherein discovering an event comprises:
discovering the location of the client, the frequency of aggregating or arriving at the location, and the details of the location information, preference of each user is identified based on the contact directory, the location information, the frequency of aggregating or arriving at the location, and the details of the location information, and the client is grouped intelligently by the server of the intelligent recognition system.

8. The method according to claim 7, further comprising:
binding the client with an account, and associates the client with a telephone number;
synchronizing, by the client, the contact directory of the client with the server;
analyzing and generating, by the server, the connections for each of the clients based on the content of the contact directories of various clients;
recording, by the client, its own location information by a predetermined time interval, and synchronizing with the location information with the server, or recording the location information manually by the user;
recognizing, by the server, the class of each marked location;
determining, by the server, the preference of the users of the clients;
identifying, by the server, users who know each other and have a same preference based on the connections of accounts or telephone numbers of each client, and generating one group of interest automatically; and
synchronizing, by the server, the generated group of interest with the client periodically.

9. A intelligently grouping system comprising a client and a server for grouping a client contact directory, **characterized by**:
connecting the client to the server in a wireless or wired manner to form an intelligent recognition system,
the client is configured for discovering an event and displaying grouping information;
the server is configured for making a series of logical decisions on a contact directory and location information to filter out groups that meet requirements, and storing the groups; and
synchronizing the grouping information with the client through a communication link.

10. The intelligently grouping system according to claim 9, **characterized by** the client further comprises:
an SMS message monitoring unit configured for discovering an SMS message group sending event, automatically generating groups, and notifying a data management unit of the groups and storing the same;
a location information management unit configured for reading the location information of the mobile terminal and notify the data management unit of the same;
the data management unit configured for storing the grouping information, and sending the contact directory and location information to the communication unit; and
the communication unit configured for synchronizing the grouping information, the contact directory, and the location information with the server.

11. The intelligently grouping system according to claim 9 or 10, **characterized by** the server further comprises:
a communication unit configured for receiving data from the client, and passing the data to a statistic and calculation unit for background data analysis, synchronizes the analysis result with the client; and
the statistic and calculation unit configured for calculating the result of the background data analysis and storing the same into a database.

12. A intelligently grouping system for grouping a client contact directory, wherein the system performs the method according to any of claims 1-9 to divides the group of interest intelligently on the client.
